# EUROPEAN PATENT APPLICATION

(11) **EP 2 626 258 A1**
(43) Date of publication of application: **14.08.2013**
(21) Application number: 13000647.1
(22) Date of filing: 07.02.2013
(51) Int. Cl.: B60T 1/10, B60T 8/24, B60T 17/22, B60W 10/06, B60W 10/08, B60W 10/24, B60W 10/30, B60W 30/18, B60W 20/00

(54) **Uphill vehicle orientation adjusted compressor control**

(30) Priority: 08.02.2012 US 201213368479
(71) Applicant: Bendix Commercial Vehicle Systems LLC, Elyria, Ohio 44035 (US)
(72) Inventor: Pfefferl, David J., Broadview Heights, OH 44147 (US); Matko, Mark A., North Olmsted, OH 44070 (US)
(74) Representative: Müller-Boré & Partner Patentanwälte

(57) **Abstract**

A motor controller unit facilitates modifying pressure thresholds for an air compressor motor in a hybrid commercial vehicle as a function of vehicle pitch and comprises a memory that stores computer-executable instructions for modifying compressor cut-in and cut-out pressure thresholds as a function of vehicle pitch, and a processor configured to execute the computer-executable instructions. The instructions comprise monitoring a pitch of the vehicle, and determining that the vehicle is on an uphill grade. The instructions further comprise reducing compressor cut-in and cut-out pressure thresholds for an on-board air compressor motor to conserve state-of-charge until the pitch of the vehicle falls below a predetermined level, and, once the pitch of the vehicle falls below a predetermined percentage of the maximum pitch detected on the uphill grade, increasing the compressor cut-in and cut-out pressure thresholds to increase available braking pressure and brake regeneration opportunities for the vehicle.

## Description

### BACKGROUND

The present application finds particular application in hybrid commercial vehicle brake systems, particularly involving regenerative braking. However, it will be appreciated that the described technique may also find application in other vehicle type systems, other braking systems, or other energy conservation systems.

Conventional approaches to regenerative braking involve dissipating power in the air compressor when the vehicle is traveling downhill. The compressor is driven to a higher pressure to create an artificial loss when driven by the regenerative braking system. This additional load on the vehicle also assists in braking. In one approach, a fuel cell powers the compressor during acceleration or constant velocity. Another approach involves an air compressor that supplies air at a higher rate when the vehicle is coasting. This system involves storing the kinetic energy of the vehicle as a higher air pressure when the compressor is kept running during coasting.

Another conventional approach involves an air compressor control system that drives an air compressor when the vehicle is going downhill as long as the metal head temperature is less than a predetermined value. In this manner, the compressor is used as a torque absorber during downhill operation. Yet another classical approach relates to a power management system for a hybrid vehicle. A traction motor is used to charge the battery when the engine load is low. When the vehicle is going uphill, the additional loads, such as the compressor, are disconnected from the battery.

The present innovation provides new and improved systems and methods for controlling state of charge in a hybrid commercial vehicle high voltage battery as a function of vehicle pitch systems and methods, which overcome the above-referenced problems and others.

### SUMMARY

In accordance with one aspect, a motor controller unit (MCU) that facilitates modifying pressure thresholds for an air compressor motor in a hybrid commercial vehicle as a function of vehicle pitch comprises a memory that stores computer-executable instructions for modifying compressor cut-in and cut-out pressure thresholds as a function of vehicle pitch, and a processor configured to execute the computer-executable instructions. The instructions comprise monitoring a pitch of the vehicle, determining that the vehicle is on an uphill grade, and reducing compressor cut-in and cut-out pressure thresholds for an on-board air compressor motor to conserve state-of-charge (SOC) until the pitch of the vehicle falls below a predetermined percentage of a maximum pitch detected on the uphill grade. The instructions further comprise, once the pitch of the vehicle falls below a predetermined percentage of the maximum pitch detected on the uphill grade, increasing the compressor cut-in and cut-out pressure thresholds to increase available air pressure and brake regeneration for the vehicle.

In accordance with another aspect, a method of modifying pressure thresholds for an air compressor motor in a hybrid commercial vehicle as a function of vehicle pitch comprises monitoring a pitch of the vehicle, determining that the vehicle is on an uphill grade, and reducing compressor cut-in and cut-out pressure thresholds for an on-board air-compressor motor to conserve state-of-charge (SOC) until the pitch of the vehicle falls below a predetermined percentage of a maximum pitch detected on the uphill grade. The method further comprises, once the pitch of the vehicle falls below a predetermined percentage of the maximum pitch detected on the uphill grade, increasing the compressor cut-in and cut-out pressure thresholds to increase available air pressure and brake regeneration for the vehicle.

According to another aspect, a system that facilitates modifying pressure thresholds for an air compressor motor in a hybrid commercial vehicle as a function of vehicle pitch comprises an air compressor having a compressor motor, and a motor controller unit (MCU) having a memory that stores computer-executable instructions for modifying compressor cut-in and cut-out pressure thresholds for the compressor motor as a function of vehicle pitch. The MCU further comprises a processor configured to monitor a pitch of the vehicle, determine that the vehicle is on an uphill grade, and reduce compressor cut-in and cut-out pressure thresholds for the compressor motor to conserve state-of-charge (SOC) until the pitch of the vehicle falls below a predetermined percentage of a maximum pitch detected on the uphill grade. The processor is further configured to, once the pitch of the vehicle falls below a predetermined percentage of the maximum pitch detected on the uphill grade, increase the compressor cut-in and cut-out pressure thresholds to increase available air pressure and brake regeneration for the vehicle.

In accordance with another aspect, an apparatus for modifying pressure thresholds for an air compressor motor in a hybrid commercial vehicle as a function of vehicle pitch comprises means for monitoring a pitch of the vehicle, means for determining that the vehicle is on an uphill grade, and means for reducing compressor cut-in and cut-out pressure thresholds for an on-board air-compressor motor to conserve state-of-charge (SOC) until the pitch of the vehicle falls below a predetermined percentage of a maximum pitch detected on the uphill grade. The apparatus further comprises means for increasing the compressor cut-in and cut-out pressure thresholds to increase available air pressure and brake regeneration for the vehicle, once the pitch of the vehicle falls below a predetermined percentage of the maximum pitch detected on the uphill grade.

Still further advantages of the subject innovation will be appreciated by those of ordinary skill in the art upon reading and understanding the following detailed description.

### BRIEF DESCRIPTION OF THE DRAWINGS

The innovation may take form in various components and arrangements of components, and in various steps and arrangements of steps. The drawings are only for purposes of illustrating various aspects and are not to be construed as limiting the invention.
FIGURE 1 illustrates an energy management system that executes an energy management algorithm employing an Electric Air Charging System (EACS) to manage a state of charge (SOC) of a hybrid commercial vehicle (or the like) high voltage battery.
FIGURE 2 illustrates a method for controlling an on-board air compressor on a hybrid commercial vehicle as a function of vehicle pitch, such as is performed by the MCU and/or the processor.
FIGURE 3 illustrates a graph depicting compressor pressures, state of charge levels, and cut-in and cut-out pressure thresholds for conserving SOC via vehicle orientation-adjusted compressor control in a vehicle traveling on a flat surface and an uphill grade, respectively.
FIGURE 4 illustrates a graph depicting compressor pressures, state of charge levels, and cut-in and cut-out pressure thresholds for reducing SOC via vehicle orientation-adjusted compressor control in a vehicle with high SOC is traveling on an uphill grade.
FIGURE 5 illustrates a graph depicting compressor pressures, state of charge levels, and cut-in and cut-out pressure thresholds for reducing SOC via vehicle orientation-adjusted compressor control in a vehicle with high SOC is traveling on a downhill grade.

### DETAILED DESCRIPTION

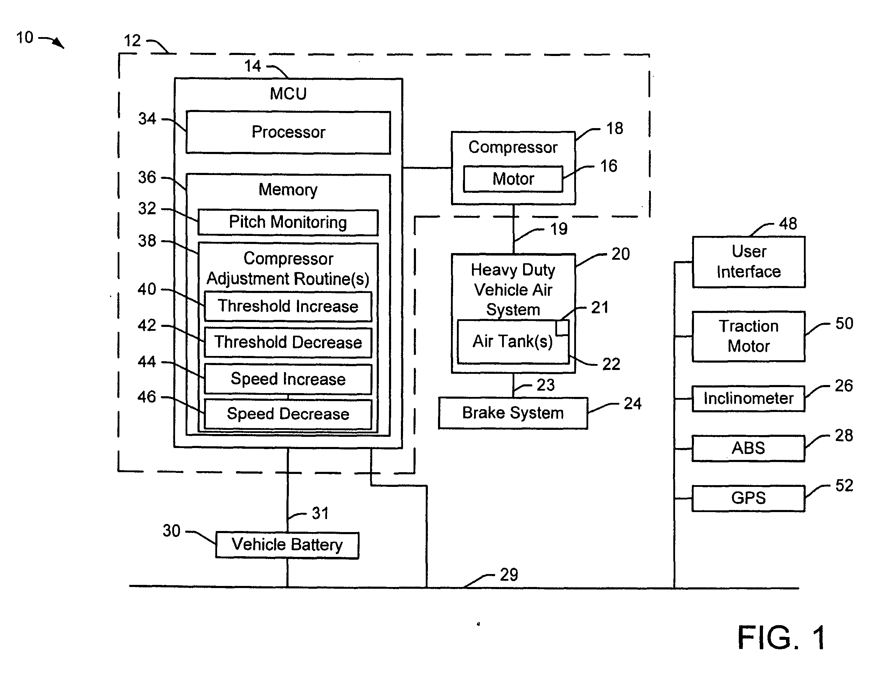

FIGURE 1 illustrates an energy management system **10** that executes an energy management algorithm employing an Electric Air Charging System (EACS) **12** to control a state of charge (SOC) of a hybrid commercial vehicle (or the like) high voltage storage device (e.g., 200V, 300V, or some other high voltage battery). The EACS **12** comprises an MCU **14** that, in addition to other engine control functions, controls a variable speed, brushless DC (BLDC) motor **16** that drives an electric compressor **18.** Other prime movers, such as an induction motor, are also contemplated. Electric compressor technologies employed in conjunction with the herein-described features can include by way of example and not limitation reciprocating, screw, scroll, rotary, and/or any other suitable type of compressor. The electric compressor **18** compresses the air and provides, via an air supply line **19,** an air pressure supply to a heavy duty vehicle air system **20** that comprises one or more air tanks **22** that are filled by the compressor **18** and which supply air pressure via an air supply line **23** to the vehicle air supply system **20** which includes a brake system **24.** The herein-described approach provides intelligent and variable control of the air compressor as a function of vehicle pitch in order to manage and improve energy efficiency within a hybrid commercial vehicle or other vehicle.

The MCU **14** communicates with other vehicle controllers (not shown). Additionally, the MCU communicates with a pitch monitoring device, such as an inclinometer **26,** an anti-lock brake system **28,** an engine, a transmission or some other suitable source of real-time vehicle pitch information, and acquires vehicle pitch status information over a vehicle serial bus **29** (e.g. a J1939 controller area network (CAN) bus or the like). The MCU continuously or periodically monitors vehicle pitch status in order to intelligently control the energy required to maintain vehicle air pressure, to create brake regeneration opportunities, as well as to preserve a state of charge (SOC) of a high voltage vehicle battery **30.** The battery 30 may be, for example, a lithium ion battery, a nickel metal hydride battery, a lead acid battery, a variant of the foregoing battery types, or any other suitable battery. The battery 30 is coupled via power lines 31 to the MCU. Although the battery described herein is a high voltage vehicle battery (e.g., 200V, 300V, etc.), it will be appreciated that the described systems and methods may be employed with any suitable power source, as well as with any suitable air compressor or load on the power source.

The intelligent control approach regulates the vehicle's air tank pressure to be in concert with other vehicle controllers and vehicle operational status by varying the compressor motor speed and pressure thresholds. The MCU monitors the pitch of the vehicle to determine whether it is desirable to adjust the cut-in and cut-out thresholds of the air compressor motor in order to conserve SOC (i.e., by reducing the cut-in and cut-out thresholds in order to cause the compressor motor to maintain lower air tank pressures) or to store air pressure for a braking event and create a brake regeneration opportunity (i.e., by increasing the cut-in and cut-out thresholds in order to cause the compressor to store air at higher pressures, thereby consuming SOC).

The MCU comprises pitch monitoring module **32** that monitors the pitch of the vehicle (e.g., periodically or continuously) and provides vehicle pitch status information to a processor **34.** In one embodiment, the pitch status information is received from one or more of the inclinometer **26** and the ABS system **28,** and stored in memory **36** for evaluation by the processor **34.** In another embodiment, vehicle pitch is inferred by the pitch monitoring module **32** as a function of measured engine load (e.g., an engine pulling a constant load will have to expend more energy pulling the load uphill than it will on a flat or downhill grade). In still another embodiment, vehicle pitch is determined from coordinate information and topographical or elevation information received by the processor and/or pitch monitoring module from an on-board GPS unit **52.** For instance, the processor and/or pitch monitoring module can cross reference the coordinates of the vehicle to topographical map information and determine from the vehicle's direction of travel whether the vehicle is traveling uphill, downhill, or on a relatively flat road.

The memory additionally stores one or more compressor adjustment routines **38** for adjusting (e.g., increasing or decreasing) air tank pressure and/or compressor motor speed, when executed by the processor. The compressor adjustment routines **38** include a pressure threshold increase routine **40** that, when executed, increases the compressor motor cut-in (ON) pressure threshold and the compressor motor cut-out (OFF) pressure threshold, and a pressure threshold decrease routine **42** that, when executed, decreases the compressor motor cut-in (ON) pressure threshold and the compressor motor cut-out (OFF) pressure threshold. The compressor adjustment routines **38** also include a motor speed increase routine **44** that increases compressor motor speed when executed, and a motor speed decrease routine **46** that decreases compressor motor speed when executed.

If the pitch of the vehicle is above a first predetermined pitch threshold (e.g., 5° from horizontal, 10° from horizontal, or some other predetermined threshold) as determined by the pitch monitoring module **32,** then the vehicle is determined to be on an uphill grade. To improve energy conservation, the processor executes the pressure threshold decrease routine **42** that lowers the compressor cut-in and cut-out pressure thresholds in order to maintain a lower level of pressurized air, in the air tanks while conserving SOC to make room for energy generated from a brake regeneration event (i.e., after the vehicle reaches the crest of the uphill grade and begins to travel downhill). Additionally or alternatively, the processor can execute the motor speed reducing routine **46,** which runs the compressor motor at lower RPM thereby maintaining the sufficient pressure for a braking event while conserving SOC should the vehicle need to activate an onboard traction motor to maintain speed up the incline.

As stated above, the pitch of the vehicle is continuously or periodically monitored, such that when the processor determines that the pitch of the vehicle has decreased to below a second predetermined pitch threshold (i.e., the uphill grade is leveling out or cresting), the processor initiates the threshold increase routine **40** that raises the compressor cut-in and cut-out pressure thresholds and in order to quickly store air at a higher pressure, while reducing SOC to make room for energy generated from a brake regeneration event (i.e., after the vehicle reaches the crest of the uphill grade and begins to travel downhill).

Additionally or alternatively, the processor can execute the motor speed increase routine **44,** which runs the compressor motor at higher RPM thereby maintaining the higher pressure and continuing the draw on the SOC. This approach both stores energy as higher air pressure and lowers the SOC, freeing up battery storage capacity for brake regeneration on a subsequent downhill grade. The higher air pressure is then available for subsequent braking events while the reduced SOC increases capacity for brake energy regeneration opportunities.

In one embodiment, the second predetermined pitch threshold is the same as the first predetermined pitch threshold, such that when the pitch of the vehicle is greater than or equal to the predetermined pitch threshold, the vehicle is deemed to be on an incline, and when the pitch of the vehicle is below the predetermined threshold, the vehicle is deemed not to be on an incline. In another embodiment, the second predetermined pitch threshold is calculated as a function of a maximum detected pitch of the vehicle (e.g., 30% of maximum pitch, 50% of maximum pitch, or some other percentage). In this example pitch is continuously or periodically monitored, and the second predetermined pitch threshold is continuously or periodically updated. Once the vehicle pitch falls below the second predetermined pitch threshold, the processor clears the memory of the second predetermined pitch threshold. When the vehicle is again determined to be on an incline (for exceeding the first predetermined threshold), then the processor recalculates a new second pitch threshold using the same predetermined percentage or function.

According to another aspect, the vehicle may be determined to be on an uphill grade when SOC is lower than a desired level, such that there is relatively less energy available to drive the compressor. In this case, the MCU processor conserves SOC by initiating a threshold decrease routine **42** and the motor speed decrease routine **46** in order to reduce the pressure thresholds and compressor RPM. Additionally, the MCU can send an alert to the driver via a user interface **48** to initiate a generator regeneration protocol, such as by engaging a traction motor **50** and/or initiating brake energy regeneration to recharge the battery **30.** The traction motor also serves as an energy regeneration device. In another embodiment, the MCU automatically sends a command directly to the traction motor **50** to recharge the battery to a nominal level (e.g., 70% of full charge or more). The MCU thus controls the compressor to more slowly build air pressure to a lower pressure threshold using less energy and conserving SOC until brake regeneration or traction motor restores the SOC. By monitoring the SOC and modifying the compressor operation, brake regeneration is facilitated. Increased brake regeneration opportunities result in improved energy recovery, less brake wear, and safer vehicle operation.

In another embodiment, the driver of the vehicle initiates one or both of the uphill pressure threshold and motor speed adjustments and the downhill pressure threshold and motor speed adjustments. For instance, when the system detects that the vehicle is on an incline, the driver is prompted via the user interface to select (via the user interface) the uphill adjustment routine(s). Similarly, when the system has determined that the vehicle has leveled off, the driver is prompted to terminate the uphill adjustment routines and/or initiate flat surface or downhill adjustment routines. In a related embodiment, the driver is prompted via the user interface to confirm the adjustment routines suggested by the MCU. In yet another embodiment, the driver determines whether the vehicle is on an incline, flat surface, or decline and initiates and terminates corresponding adjustment routines via the interface.

Additionally, if the vehicle is determined to be on a downhill grade, the MCU **14** sends a command to the vehicle air system **20** to cycle an air dryer (not shown) and/or open a vent in the air line **23** leading to the brake system 24 so as to consume and/or release air. Additionally, the cut-in and cut-out pressure thresholds are increased by executing the threshold increase routine **40** and compressor speed increases. The compressor is run continuously to maintain the air pressure between the cut-in and cut-out thresholds to reduce SOC, thereby creating storage capacity. In this manner, SOC is continually reduced so that there is consistent capacity within the high voltage batteries to store brake regeneration energy and permit brake regeneration drag to control the vehicle speed without using the foundation brakes. Brake regeneration time is increased to reduce brake wear and heat and to improve brake safety, which is useful in lengthy downhill runs where too much braking leads to severe drum brake fading and brake heating.

It will be appreciated that although the herein-described systems and methods relate to an air compressor system that is manipulated to control vehicle battery SOC, any suitable electrical system on the vehicle (e.g., a hydraulic system, etc.) may be employed in a similar fashion, and that the described systems and methods are not limited to being employed in conjunction with an air compressor. It will further be appreciated that although Figure 1 depicts the system **10** as comprising an air compressor that is operably coupled to an MCU that performs the described functions, in another embodiment the processor **34** and memory **26** are integral to the air compressor **18** and/or the EACS component **12.**

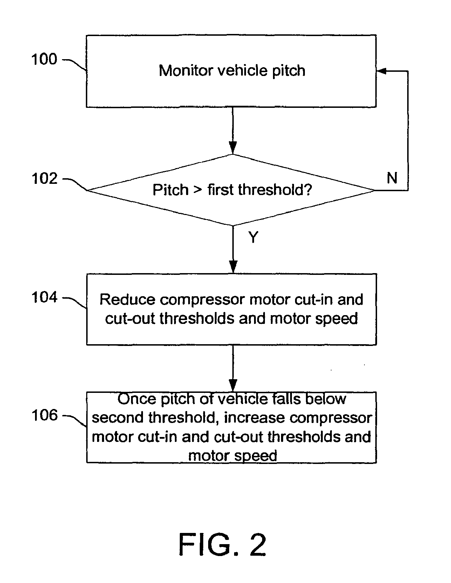

FIGURE 2 illustrates a method for controlling an on-board air compressor on a hybrid commercial vehicle as a function of vehicle pitch, such as is performed by the MCU **14** and/or the processor **34** (Figure 1). At **100,** vehicle pitch is monitored. For instance, vehicle pitch can be monitored by a pitch monitoring module that receives pitch information from one or more of an inclinometer and/or other system with pitch monitoring functionality. In another example, vehicle pitch is inferred based on measured engine load and known vehicle weight and vehicle velocity. At **102,** a determination is made regarding whether the vehicle is on an incline or uphill grade, e.g., by comparing a detected vehicle pitch to a predetermined pitch threshold. If the determination at **102** indicates that the vehicle is not on an uphill grade or incline, then the method reverts to 100, where vehicle pitch monitoring continues. If the determination at **102** indicates that the vehicle is on an uphill grade or incline, then at **104,** compressor cut-in and cut-out pressure thresholds for an on-board air-compressor are reduced to conserve state-of-charge (SOC) until the pitch of the vehicle falls below a second predetermined pitch threshold (e.g., a predetermined percentage of a maximum pitch detected on the uphill grade). In this manner, the SOC is preserved for a traction motor or the like in the event the traction motor is activated toward the top of the hill. Additionally, compressor motor speed can be decreased when reducing the compressor cut-in and cut-out pressure thresholds, in order to further reduce SOC consumption. At **106,** once the pitch of the vehicle falls below second predetermined pitch threshold, the compressor cut-in and cut-out pressure thresholds are increased to increase available air pressure and brake regeneration opportunities for the vehicle. Additionally, compressor motor speed can be increased when increasing the compressor cut-in and cut-out pressure thresholds, in order to reduce SOC to a level that permits a brake regeneration event. The second predetermined pitch threshold may be the same as the first predetermined pitch threshold, or may be a predetermined percentage of a maximum pitch detected while the vehicle is on the inline. In one example, the predetermined percentage is in the range of 30% to 50% of the maximum pitch detected on the uphill grade. Additionally, the driver of the vehicle can be prompted to confirm (e.g., via an onboard user interface or the like) that the vehicle is leveling out once it is determined that the pitch of the vehicle has fallen below the predetermined percentage of the maximum pitch detected on the uphill grade or the driver can cancel the feature.

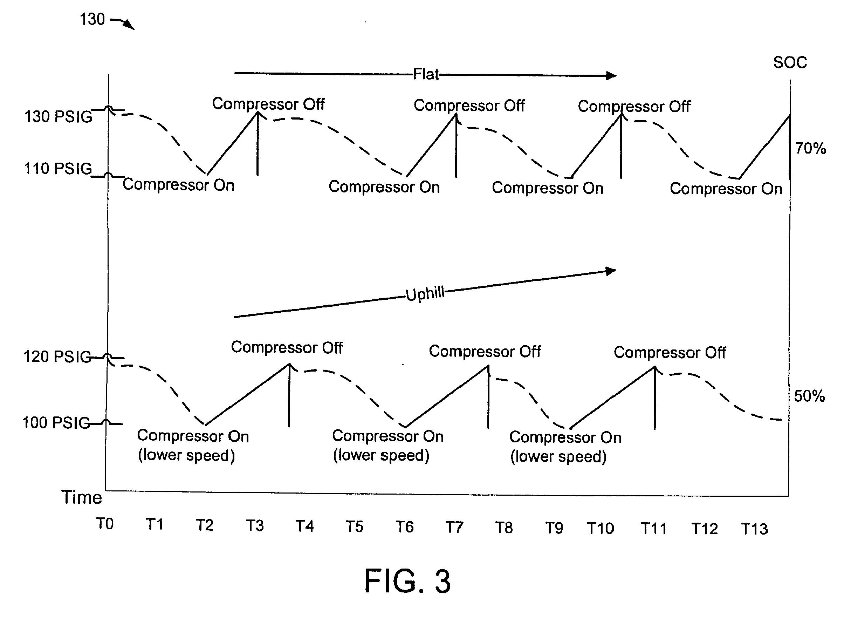

FIGURE 3 illustrates a graph **130** depicting compressor pressures, state of charge levels, and cut-in and cut-out pressure thresholds for conserving SOC via vehicle orientation-adjusted compressor control in a vehicle traveling on a flat surface and an uphill grade, respectively. When traveling uphill, an onboard traction motor requires any available SOC. The compressor control systems and methods described herein conserve energy by reducing the cut-in and cut-out pressure thresholds and the speed of the compressor motor to maintain the minimum RPM and air pressure needed to provide sufficient SOC for the traction motor. As shown in the graph **130,** when the vehicle is traveling on a flat surface, the traction motor is not needed and the state of charge may be maintained at 70% (or some other predetermined SOC level). Cut-in and cut-out pressure thresholds that trigger the compressor motor to turn on and off may be at 110 psig and 130 psig, respectively. When tank pressure falls to 110 psig in this example, the compressor motor turns on at nominal operating speed (e.g., 3000 RPM or some other nominal motor speed depending on the type of compressor motor). However, when the vehicle is on an uphill grade, the described systems and methods reduce the cut-in and cut-out pressure thresholds, e.g., to 100 psig and 120 psig respectively (or some other predetermined cut-in and cut-out pressure thresholds which may dependent on vehicle operation regulations and the like), as well as the compressor motor operating speed. To further this example, when traveling on an uphill grade, the air tank pressure is permitted to fall to 100 psig before the compressor motor kicks in (e.g., at 1500 RPM or some other reduced operating speed, which may be a function of compressor type). The compressor motor then runs until tank pressure reaches 120 psig, at which time the motor cuts out. SOC in this example is maintained at approximately 50% of full charge (or some other predetermined SOC level) despite the increased SOC demand (e.g., by the traction motor) during the uphill travel..

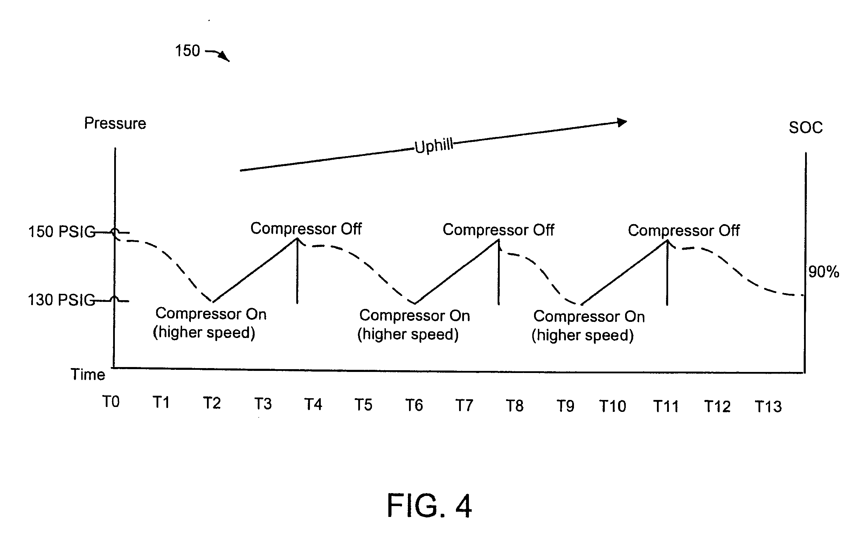

FIGURE 4 illustrates a graph **150** depicting compressor pressures, state of charge levels, and cut-in and cut-out pressure thresholds for reducing SOC via vehicle orientation-adjusted compressor control in a vehicle with high SOC is traveling on an uphill grade. When traveling uphill and the SOC is high, the described control systems and methods dynamically raise the cut-in and cut-out pressure thresholds and compressor motor RPM to cause the compressor to start and run at a higher speed. The compressor control reduces the SOC for subsequent brake regeneration while storing energy in the form of higher air pressure. In the illustrated example, the vehicle is on an uphill grade and has an SOC of 90% of maximum charge. It may be desirable to reduce the SOC (e.g., if the vehicle is near the top of the hill as made known through the GPS) in order to make room for charge generated by a regenerative braking event (e.g., once the vehicle crests the hill and begins traveling downhill). To reduce the SOC, the cut-in and cut-out pressure thresholds are increased to 130 psig and 150 psig, respectively, and compressor motor speed is increased to 3600 RPM (or some other predetermined increased operating speed, which may be a function of compressor type). Thus, when air tank pressure falls to 130 psig, the motor compressor turns on and increases tank pressure until it reaches 150 psig, at which time the compressor motor turns off. Maintaining higher air pressure in the tanks and running the compressor motor at increased speed serves to reduce the SOC to make room for charge generated by a brake regeneration event. Additionally, increased air pressure is available to the vehicle for friction braking and/or for generating charge during the braking event.

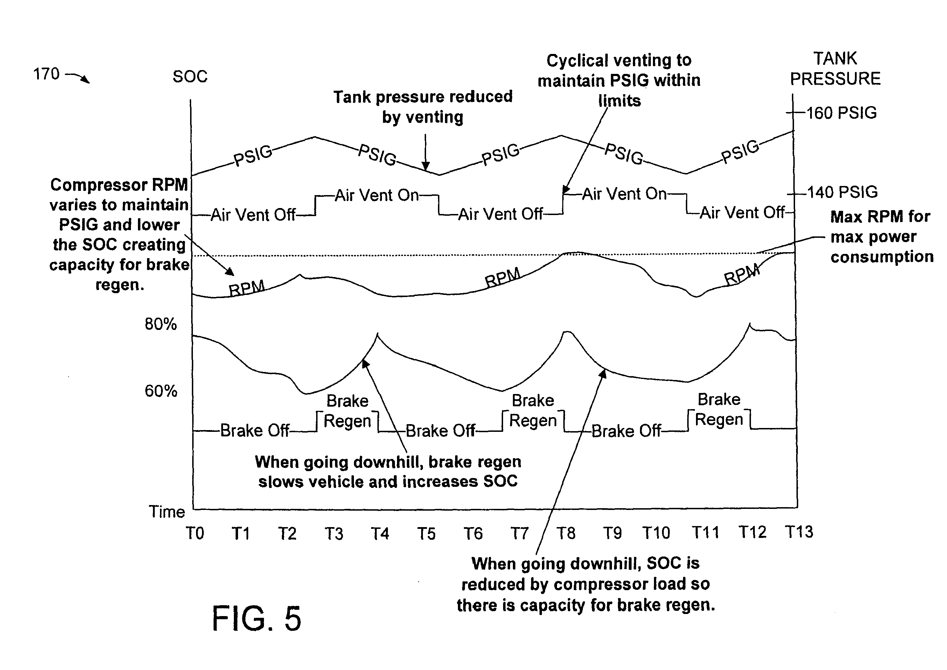

FIGURE 5 illustrates a graph **170** depicting compressor pressures, state of charge levels, and cut-in and cut-out pressure thresholds for reducing SOC via vehicle orientation-adjusted compressor control in a vehicle with high SOC is traveling on a downhill grade. When traveling downhill, especially on long runs, there is a need to increase brake regen and lessen the use of foundation brakes. The MCU in this case causes the air tanks to vent air to reduce pressure. Reduced tank pressure acts as a load, decreasing SOC and creating capacity for additional brake regeneration. The pressure thresholds are increased and the compressor runs continuously at a maximum speed to maintain air pressure while venting. Additionally, running the compressor at maximum speed consumes additional charge, which further creates brake regeneration opportunities. By cycling the vent between on and off states, PSIG is maintained within desired limits. In the illustrated example, compressor motor cut-in and cut-out pressure thresholds are increased to 140 psig and 160 psig, respectively. Brake regeneration events occur as the vehicle travels downhill and employs the vehicles brake system, which cases SOC to rise. To keep SOC at a desired level so that brake regeneration is available, the MCU periodically causes the air tanks to vent air, which causes the tank pressure to drop to a level that in turn causes the compressor motor to turn on and draw SOC. By increasing the cut-in and cut-out pressure thresholds, the motor turns on at tank pressures that would normally not trigger the compressor motor to do so, thereby drawing more SOC than under normal conditions. To draw additional SOC, the compressor motor can be run at an increased speed (e.g., 3600 or some other predetermined increased speed relative to nominal operating speed, which may be a function of motor type). In this manner, SOC is maintained at a level that permits brake regeneration on a downhill grade.

The innovation has been described with reference to several embodiments. Modifications and alterations may occur to others upon reading and understanding the preceding detailed description. It is intended that the innovation be construed as including all such modifications and alterations insofar as they come within the scope of the appended claims or the equivalents thereof.

Having thus described the preferred embodiments, the invention is now claimed to be:

## Claims

1. A motor controller unit (MCU) that facilitates modifying pressure thresholds for an air compressor motor in a hybrid commercial vehicle as a function of vehicle pitch, comprising:
a memory that stores computer-executable instructions for modifying compressor cut-in and cut-out pressure thresholds as a function of vehicle pitch;
a processor configured to execute the computer-executable instructions, the instructions comprising:
monitoring a pitch of the vehicle;
determining that the vehicle is on an uphill grade;
reducing compressor cut-in and cut-out pressure thresholds for an on-board air compressor motor to conserve state-of-charge (SOC) until the pitch of the vehicle falls below a predetermined percentage of a maximum pitch detected on the uphill grade; and
once the pitch of the vehicle falls below a predetermined percentage of the maximum pitch detected on the uphill grade, increasing the compressor cut-in and cut-out pressure thresholds to increase available air pressure and brake regeneration for the vehicle.

2. The motor controller unit according to claim 1, wherein the processor is configured to monitor pitch of the vehicle by inferring vehicle pitch from measured engine load information and vehicle velocity and/or wherein the processor is configured to monitor pitch of the vehicle by receiving vehicle pitch information from an inclinometer.

3. The motor controller unit according to claim 1 or 2, wherein the processor is configured to monitor pitch of the vehicle by receiving vehicle pitch information from an onboard anti-lock brake (ABS) stability sensor with vehicle pitch monitoring functionality and/or wherein the processor is configured to determine vehicle pitch from coordinate information and topographical information received from a global positioning system on the vehicle.

4. The motor controller unit according to any of claims 1 to 3, wherein the instructions further include decreasing compressor motor speed when reducing the compressor cut-in and cut-out pressure thresholds and/or wherein the instructions further include increasing compressor motor speed when increasing the compressor cut-in and cut-out pressure thresholds.

5. The motor controller unit according to any of claims 1 to 4, wherein the predetermined percentage is in the range of 30% to 50% of the maximum pitch detected on the uphill grade.

6. A method of modifying pressure thresholds for an air compressor motor in a hybrid commercial vehicle as a function of vehicle pitch, comprising:
monitoring a pitch of the vehicle;
determining that the vehicle is on an uphill grade;
reducing compressor cut-in and cut-out pressure thresholds for an on-board air-compressor motor to conserve state-of-charge (SOC) until the pitch of the vehicle falls below a predetermined percentage of a maximum pitch detected on the uphill grade; and
once the pitch of the vehicle falls below a predetermined percentage of the maximum pitch detected on the uphill grade, increasing the compressor cut-in and cut-out pressure thresholds to increase available air pressure and brake regeneration for the vehicle.

7. The method according to claim 6, further comprising monitoring the pitch of the vehicle by at least one of:
inferring vehicle pitch from measured engine load information and vehicle velocity;
receiving vehicle pitch information from an onboard inclinometer;
receiving vehicle pitch information from an onboard anti-lock brake (ABS) stability sensor with vehicle pitch monitoring functionality; and
determining vehicle pitch from coordinate information and topographical information received from a global positioning system on the vehicle.

8. The method according to claim 6 or 7, further comprising decreasing compressor motor speed when reducing the compressor cut-in and cut-out pressure thresholds and/or further comprising increasing compressor motor speed when increasing the compressor cut-in and cut-out pressure thresholds.

9. The method according to any of claims 6 to 8, wherein the predetermined percentage is in the range of 30% to 50% of the maximum pitch detected on the uphill grade.

10. A system that facilitates modifying pressure thresholds for an air compressor motor in a hybrid commercial vehicle as a function of vehicle pitch, comprising:
an air compressor having a compressor motor;
a motor controller unit (MCU) having a memory that stores computer-executable instructions for modifying compressor cut-in and cut-out pressure thresholds for the compressor motor as a function of vehicle pitch, and a processor configured to:
monitor a pitch of the vehicle;
determine that the vehicle is on an uphill grade;
reduce compressor cut-in and cut-out pressure thresholds for the compressor motor to conserve state-of-charge (SOC) until the pitch of the vehicle falls below a predetermined percentage of a maximum pitch detected on the uphill grade; and
once the pitch of the vehicle falls below a predetermined percentage of the maximum pitch detected on the uphill grade, increase the compressor cut-in and cut-out pressure thresholds to increase available air pressure and brake regeneration for the vehicle.

11. The system according to claim 10, wherein the processor monitors the pitch of the vehicle by at least one of:
inferring vehicle pitch from measured engine load information and vehicle velocity;
receiving vehicle pitch information from an onboard inclinometer;
receiving vehicle pitch information from an onboard anti-lock brake (ABS) stability sensor with vehicle pitch monitoring functionality; and
determining vehicle pitch from coordinate information and topographical information received from a global positioning system on the vehicle.

12. The system according to claim 10 or 11, wherein the processor decreases compressor motor speed when reducing the compressor cut-in and cut-out pressure thresholds.

13. The system according to any of claims 10 to 12, wherein the processor increases compressor motor speed when increasing the compressor cut-in and cut-out pressure thresholds.

14. The system according to any of claims 10 to 13, wherein the predetermined percentage is in the range of 30% to 50% of the maximum pitch detected on the uphill grade.

15. An apparatus for modifying pressure thresholds for an air compressor motor in a hybrid commercial vehicle as a function of vehicle pitch, comprising:
means for monitoring a pitch of the vehicle;
means for determining that the vehicle is on an uphill grade;
means for reducing compressor cut-in and cut-out pressure thresholds for an on-board air-compressor motor to conserve state-of-charge (SOC) until the pitch of the vehicle falls below a predetermined percentage of a maximum pitch detected on the uphill grade; and
means for increasing the compressor cut-in and cut-out pressure thresholds to increase available air pressure and brake regeneration for the vehicle, once the pitch of the vehicle falls below a predetermined percentage of the maximum pitch detected on the uphill grade.
